# FASCICULE DE BREVET EUROPEEN

(11) **EP 0 547 950 B1**
(45) Date de publication et mention de la délivrance du brevet: **15.05.1996**
(21) Numéro de dépôt: 92403379.8
(22) Date de dépôt: 11.12.1992
(51) Int. Cl.: B01D 35/18, F01M 5/00, F01M 1/10

(54) **Filtre à huile**
Ölfilter
Oil filter

(30) Priorité: 16.12.1991 FR 9115595
(43) Date de publication de la demande: 23.06.1993
(73) Titulaire: FILTRAUTO, F-78180 Montigny le Bretonneux (FR)
(72) Inventeur: Legrand, Guy, F-78310 Elancourt (FR); Blazek, Bernard, F-33140 Villenave d'Ornon (FR)
(74) Mandataire: Behaghel, Pierre

(56) Documents cités:
- WO-A-88/06228
- DE-A- 2 051 973
- DE-A- 2 361 515
- DE-A- 3 317 008
- FR-A- 2 558 945
- US-A- 4 923 603

## Description

L'invention concerne les filtres à huile qui comprennent, dans un boîtier cylindrique ou sensiblement tel, un élément filtrant.

L'huile de lubrification des moteurs à combustion interne est chauffée lors de son travail, et si sa température devient trop élevée, elle risque de se dégrader, ce qui pose des problèmes pour sa filtration par l'élément filtrant, généralement constitué en papier.

Pour remédier à cet inconvénient, il a déjà été proposé de refroidir l'huile juste avant sa filtration en constituant la paroi latérale du boîtier du filtre à huile par un échangeur thermique définissant deux circuits enchevêtrés dont l'un est destiné à l'huile avant sa filtration et l'autre à un liquide de refroidissement.

L'invention vise plus particulièrement, parmi les filtres à huile du genre en question, ceux pour lesquels l'échangeur thermique est constitué par deux chemises cylindriques coaxiales s'entourant mutuellement et par une cloison intermédiaire d'allure générale cylindrique, mais déformée, disposée dans l'espace annulaire compris entre les deux chemises.

Dans les modes de réalisation connus de ces filtres à huile, la cloison intermédiaire déformée est constituée par une feuille cylindrique plissée axialement de façon à former une succession de gorges et nervures annulaires de révolution dont la demi-section axiale présente une forme sensiblement sinusoïdale (voir le document WO-A-88/06228).

L'invention propose un nouveau type de construction pour les filtres du genre en question.

A cet effet, les filtres à huile du genre en question selon l'invention sont caractérisés en ce que les deux circuits d'échange thermique sont hélicoïdaux et en ce que la cloison intermédiaire d'allure générale cylindrique est venue de moulage avec, évidées respectivement dans ses deux faces, deux gorges hélicoïdales chaque gorge étant à spires non jointives et délimitant en partie l'un des deux circuits ci-dessus, la partie restante de délimitation de chacun de ces deux circuits étant constituée par la chemise qui est juxtaposée radialement contre les bords de la gorge correspondante.

Dans des modes de réalisation avantageux, on a recours en outre à l'une et ou à l'autre des dispositions suivantes :
- le circuit réservé au liquide de refroidissement comprend plusieurs tronçons hélicoïdaux branchés en parallèle,
- dans un filtre selon l'alinéa précédent, chaque tronçon hélicoïdal s'étend sur 1,5 spires,
- la section droite de l'une au moins des gorges présente le profil général d'un U avec des décrochements latéraux en saillie vers l'intérieur de l'U.

L'invention comprend, mises à part ces dispositions principales, certaines autres dispositions qui s'utilisent de préférence en même temps et dont il sera plus explicitement question ci-après.

Dans ce qui suit, l'on va décrire des modes de réalisation préférés de l'invention, en se référant au dessin ci-annexé d'une manière bien entendu non limitative.

La figure 1, de ce dessin, montre en coupe axiale un mode de réalisation de filtre à huile selon l'invention.

La figure 2 est une coupe transversale partielle de cette figure 1 selon II-II, figure 1.

La figure 3 montre une portion d'une variante de ce mode de réalisation, également conforme à l'invention.

Les figures 4 et 5 montrent de manière très simplifiée les situations thermiques dans les deux filtres ci-dessus.

Dans chaque cas, le filtre à huile comprend un boîtier 1 cylindrique de révolution dans lequel est logé un élément filtrant amovible 2 également cylindrique de révolution, jetable ou recyclable, et qui est fermé hermétiquement à l'aide d'un couvercle 3 avec interposition d'un joint d'étanchéité 4.

Le boîtier 1 comprend un fond 5 dans lequel sont formées une entrée excentrée d'huile 6 et une sortie axiale d'huile 7, et une paroi latérale 8, sur la face extérieure de laquelle sont branchées une admission d'eau 9 et une évacuation d'eau 10 en des positions diamétralement opposées l'une par rapport à l'autre en vue axiale.

La paroi latérale 8 est constituée par deux chemises cylindriques coaxiales intérieure 11 et extérieure 12, s'entourant mutuellement, et par une cloison intermédiaire 13 disposée dans l'espace annulaire entre les deux chemises 11 et 12.

La cloison intermédiaire 13 et le fond 5 peuvent être coulés en une seule pièce.

Deux gorges hélicoïdales à spires non jointives, l'une intérieure 14 et l'autre extérieure 15, sont évidées dans la cloison intermédiaire 13 de façon à former un circuit 16, délimité par la gorge 14 et la chemise intérieure 11, pour l'huile avant son filtrage, et un second circuit 17,18 délimité par la gorge 15 et la chemise extérieure 12, pour l'eau ou pour tout autre liquide de refroidissement approprié.

Les gorges 14 et 15 viennent de moulage avec la cloison 13. Elles présentent avantageusement un profil qui diffère d'un simple U à parois lisses, cet U comprenant par exemple sur ses ailes des rugosités ou aspérités, continues ou non, ou encore des décrochements ou épaulements S, continus ou non, faisant saillie sur lesdites ailes, de façon à améliorer la turbulence du liquide qui les longe, et donc l'efficacité de l'échange thermique. Il est facile de réaliser ces saillies S ou analogues lors du moulage des gorges.

Le premier circuit 16 est formé d'un seul conduit hélicoïdal 14, s'étendant de l'entrée d'huile inférieure 6 à une embouchure supérieure 19 débouchant à l'intérieur du boîtier 1.

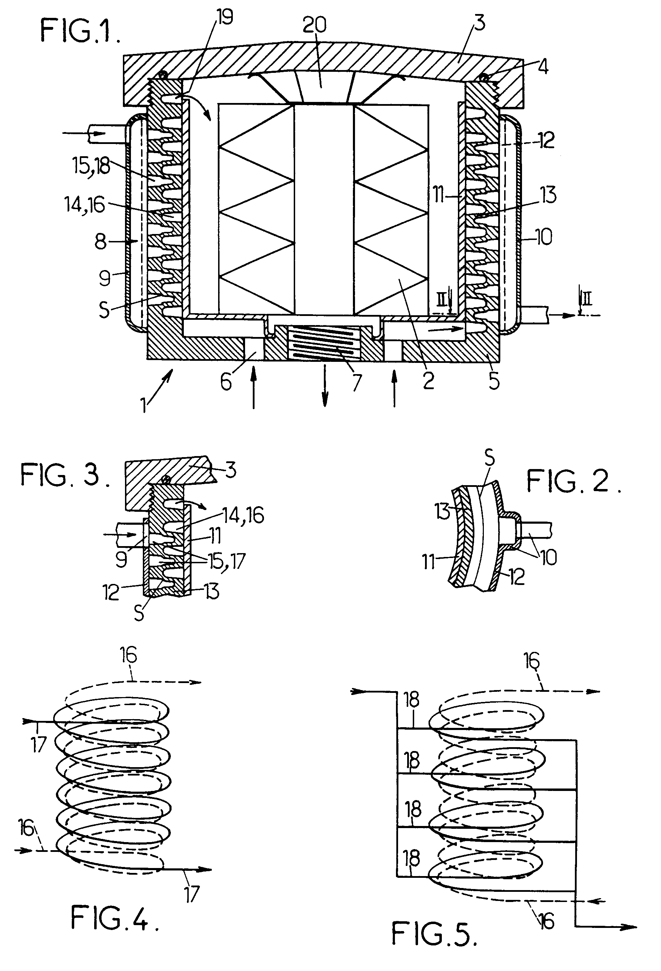

Le second circuit peut également être formé d'un seul conduit hélicoïdal 17 (figures 3 et 4), cas dans lequel l'admission 9 et l'évacuation 10 se présentent comme de simples orifices évidés dans la cloison 12 et prolongés vers l'extérieur par des raccords radiaux.

Mais ledit second circuit est formé de préférence par plusieurs tronçons hélicoïdaux 18 (figures 1, 2 et 5) montés en parallèle et s'étendant chacun sur une longueur d'environ 1 ou 2 spires, et avantageusement chacun sur une longueur d'une spire et demie, entre les deux zones 9 et 10 : dans ce cas, l'admission 9 et l'évacuation 10 se présentent comme des nervures longitudinales extérieures formées dans la cloison 12 et évidées au voisinage de leurs extrémités par des orifices eux-mêmes prolongés vers l'extérieur par des raccords radiaux.

Dans chaque cas, un ressort annulaire 20, interposé axialement entre l'élément filtrant 2 et le couvercle 3, assure à la fois un bon positionnement de cet élément dans le boîtier et une séparation étanche entre les faces amont et aval dudit élément, ce qui oblige la totalité de l'huile à traverser cet élément.

Les figures 4 et 5 montrent, de façon schématique, les situations thermiques régnant dans les échangeurs comprenant respectivement, pour l'eau,
- un tronçon hélicoïdal unique 17 (figure 4),
- et une pluralité de tronçons hélicoïdaux 18 parallèles (figure 5),
- l'eau de refroidissement circulant dans les deux systèmes à contre-courant par rapport à l'huile.

Dans l'échangeur représenté en figure 4, l'huile, qui entre dans le conduit hélicoïdal 16 à température élevée, perd pendant son parcours le long dudit conduit, une partie de sa chaleur par échange thermique avec l'eau froide circulant dans le tronçon hélicoïdal unique 17. Il en résulte, à part la baisse recherchée de la température de l'huile, un échauffement continu de l'eau tout le long de ce tronçon unique, ce qui a pour effet que, lorsque l'huile entre en contact thermique avec l'eau, cette dernière est déjà chauffée à une température supérieure à sa température d'entrée.

L'échangeur représenté en figure 5 diffère de celui représenté en figure 4 en ce que le volume d'eau participant à l'échange thermique est subdivisé en une pluralité de volumes partiels dont chacun emprunte un des tronçons hélicoïdaux parallèles 18. Ceci a pour effet que l'huile, lorsqu'elle entre en contact thermique avec chaque volume partiel d'eau, rencontre une eau dont la température est relativement proche de sa température d'entrée : ainsi le refroidissement de l'huile est plus efficace qu'avec l'échangeur précédent.

Dans chaque cas, si le filtre équipe un moteur à combustion interne, il est avantageusement monté dans le circuit de refroidissement de ce moteur, le liquide de refroidissement du moteur étant alors utilisé en même temps pour refroidir ledit filtre.

## Revendications

1. Filtre à huile comprenant un boîtier (1) sensiblement cylindrique qui contient un élément filtrant (2), la paroi latérale (8) de ce boîtier étant constituée par deux chemises cylindriques coaxiales (11,12) s'entourant mutuellement et par une cloison intermédiaire (13) d'allure générale cylindrique, mais déformée, disposée jointivement dans l'espace annulaire compris entre les deux chemises de façon à former avec elles deux circuits enchevêtrés en échange thermique mutuel, l'un (16) pour l'huile avant son filtrage et l'autre (17,18) pour un liquide de refroidissement, caractérisé en ce que les deux circuits (16 ; 17,18) sont hélicoïdaux et en ce que la cloison intermédiaire d'allure générale cylindrique (13) est venue de moulage avec, évidées respectivement dans ses deux faces, deux gorges hélicoïdales (14, 15), chaque gorge étant à spires non jointives et délimitant en partie l'un des deux circuits (16), (17, 18), la partie restante de délimitation de chacun de ces deux circuits étant constituée par la chemise (11, 12) qui est juxtaposée radialement contre les bords de la gorge correspondante.

2. Filtre selon la revendication 1, caractérisé en ce que le circuit réservé au liquide de refroidissement comprend plusieurs tronçons hélicoïdaux (18) branchés en parallèle.

3. Filtre selon la revendication 2, caractérisé en ce que chaque tronçon hélicoïdal (18) s'étend sur 1,5 spires.

4. Filtre selon l'une quelconque des précédentes revendications, caractérisé en ce que la section droite de l'une au moins des gorges (14,15) présente le profil général d'un U avec des décrochements latéraux (S) en saillie vers l'intérieur de l'U.

## Claims

1. Oil filter comprising a substantially cylindrical casing (1) which contains a filtering element (2), the side wall (8) of this casing consisting of two coaxial cylindrical sleeves (11, 12) which surround one another, and of an intermediate partition (13) of generally cylindrical shape, but deformed, and arranged in adjoining fashion in the annular space lying between the two sleeves so as to form, with them, two entwined circuits for mutual heat exchange, one (16) for oil before its filtration and the other (17, 18) for a cooling liquid, characterized in that the two circuits (16 ; 17, 18) are helical and in that the intermediate partition (13), having a generally cylindrical shape, is moulded as a single piece with two helical grooves (14, 15) hollowed respectively in its two faces, each groove being made with non joined turns and defining partly one of the two above mentioned circuits (16 ; 17, 18), the remaining defining part of each of said two circuits being made of the sleeve (11, 12) which is juxtaposed radially against the edges of the said groove.

2. Filter according to claim 1, characterized in that the circuit reserved for the cooling liquid comprises several helical segments (18) connected in parallel.

3. Filter according to claim 2, characterized in that each helical segment (18) extends over 1.5 turns.

4. Filter according to any one of the preceding claims, characterized in that the cross-section of a least one of the grooves (14, 15) exhibits the general profile of a U with lateral cutouts (S) projecting towards the inside of the U.

## Patentansprüche

1. Ölfilter, das aus einem im wesentlichen zylindrischen Behälter (1), der ein Filterelement (2) enthält und dessen Seitenwand (8) aus zwei koaxialen zylindrischen Mänteln (11, 12), von denen der eine den anderen umgibt, und einer dazwischen liegenden Trennwand (13) besteht, die eine allgemein zylindrische, sondern verbogene Form hat und dicht in dem ringförmigen Zwischenraum zwischen den beiden Mänteln derart angeordnet ist, daß sie mit diesen zwei Kreise bildet, die in gegenseitigem Wärmeaustausch stehen, wobei einer der Kreise (16) für das Öl vor dem Filtrieren und der andere (17, 18) für eine Kühlflüssigkeit vorgesehen ist, dadurch gekennzeichnet, daß die beiden Kreise (16; 17, 18) schraubenförmig verlaufen und daß die dazwischen liegende Trennwand (13) mit allgemein zylindrischer Form aus einem Stück durch Verformung mit zwei jeweils in den beiden Oberflächen ausgenommenen schraubenförmigen Rinnen (14, 15) gebildet ist, wobei jede Rinne nicht aneinander stoßende Windungen aufweist und teilweise einen der beiden Kreise (16; 17, 18) begrenzt, während der restliche Teil der Begrenzung jeder der beiden Kreise aus dem Mantel (11, 12) besteht, der in radialer Richtung gegenüber den Rändern der entsprechenden Rinne ausgerichtet ist.

2. Ölfilter nach Anspruch 1, dadurch gekennzeichnet, daß der für die Kühlflüssigkeit vorgesehene Kreis mehrere schraubenförmige Abschnitte (18) aufweist, die parallel zueinander geschaltet sind.

3. Ölfilter nach Anspruch 2, dadurch gekennzeichnet, daß jeder schraubenförmige Abschnitt (18) sich über 1,5 Windungen erstreckt.

4. Ölfilter nach einem der vorhergehenden Ansprüche, dadurch gekennzeichnet, daß der Querschnitt wenigstens einer der Rinnen (14, 15) ein allgemein U-förmiges Profil mit seitlichen Absätzen (S) aufweist, die gegenüber dem Innenraum des U-Profils vorstehen.
